## Europäisches Patentamt
## European Patent Office
## Office européen des brevets

(19)

(11) Veröffentlichungsnummer: **0 061 691**
**A1**

(12) # EUROPÄISCHE PATENTANMELDUNG

(21) Anmeldenummer: **82102375.1**

(22) Anmeldetag: **23.03.82**

(51) Int. Cl.³: **C 08 G 65/44**

(30) Priorität: **01.04.81 DE 3113096**

(43) Veröffentlichungstag der Anmeldung:
**06.10.82 Patentblatt 82/40**

(84) Benannte Vertragsstaaten:
**BE DE FR GB NL**

(71) Anmelder: **BASF Aktiengesellschaft
Carl-Bosch-Strasse 38
D-6700 Ludwigshafen(DE)**

(72) Erfinder: **Naarmann, Herbert, Dr.
Haardtblick 15
D-6719 Wattenheim(DE)**

(72) Erfinder: **Brandstetter, Franz, Dr.
Ritterbuechel 45
D-6730 Neustadt(DE)**

(72) Erfinder: **Heil, Eduard
Hardenburgstrasse 4
D-6703 Limburgerhof(DE)**

(54) **Verfahren zur Herstellung von Polyphenylenethern.**

(57) Die Erfindung betrifft ein Verfahren zur Herstellung hochmolekularer Polyphenylenether aus einwertigen Phenolen, durch oxidative Kupplungsreaktionen mit Sauerstoff bei Temperaturen zwischen 10 und 70°C in Gegenwart eines Katalysators aus einem Schwermetallkomplex, eines organischen Amins, eines organischen Lösungsmittels im Bereich von 1 : 1 bis 20 : 1 Gewichtsteilen und gegebenenfalls eines Aktivators, wobei erfindungsgemäß in Gegenwart von Wasser und einem Phosphonium- und/oder Ammoniumkation polykondensiert wird.

Bevorzugt ist ein Verfahren, bei dem das Phosphonium- und/oder Ammoniumkation das Kation des Tetrabutyl-, Tetraoctyl-, Tetranonyl-, Tetradodecylammoniumbromids, des Tetranonylphosphoniumchlorids oder des Triphenylphosphoniumhydrochlorids ist.

BASF Aktiengesellschaft                    O.Z. 0050/035060

"Verfahren zur Herstellung von Polyphenylenethern

Die Erfindung betrifft ein Verfahren zur Herstellung hochmolekularer Polyphenylenether aus einwertigen Phenolen, die in beiden ortho-Stellungen und gegebenenfalls in meta-Position, nicht aber in para-Stellung Alkylsubstituenten aufweisen, durch oxidative Kupplungsreaktion mit Sauerstoff bei Temperaturen zwischen 10 und 70°C in Gegenwart eines Katalysators aus einem Schwermetallkomplex, eines organischen Amins, eines organischen Lösungsmittels im Bereich von 1 : 1 bis 20 : 1 Gewichtsteilen, bezogen auf das monomere Phenol und gegebenenfalls eines Aktivators.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Es ist bekannt, zur Erfüllung dieser Erfordernisse in aromatischen Lösungsmitteln wie Benzol oder Toluol die Reaktion in Anwesenheit eines Katalysatorkomplexes aus Kupfer-II-Salzen und eines geradkettigen aliphatischen Amins sowie eines niedermolekularen Alkylalkohols durchzuführen (vgl. US-PS 3 661 848). Nach Beendigung der Reaktion wird die das Polymere enthaltende Aromatenlösung mit etwa der 10-fachen Menge Methanol versetzt, das ausgefällte Polymere abfiltriert, gewaschen und getrocknet.

Es ist auch bereits bekannt, zur Verbesserung des Verfahrens als Lösungsmittel einen aromatischen $C_8$- bis $C_{10}$-Kohlenwasserstoff wie Ethylbenzol (vgl. DE-OS 30 33 813) oder einen (cyclo)aliphatischen $C_5$- bis $C_{10}$-Kohlenwasserstoff wie Cyclohexan (vgl. DE-OS 30 29 208) zu verwenden. An Stelle des Kupfer-II-Salzes kann als Kata-

Fre/P

lysator auch ein Metallkomplex des 5,14-Dihydrodibenzo-[b.i.] [5.9.14.18] tetraaza [14]-annulens verwendet werden, wobei das Metall bevorzugt Eisen, Kobalt, Nickel oder Palladium ist (vgl. DE-OS 31 07 201).

Diese bisher bekannten Reaktionswege weisen den Nachteil auf, daß die Polykondensationen wegen der weiten Explosionsgrenzen Lösungsmittel/Sauerstoff schwer durchführbar sind. Außerdem ist es nach bekannten Verfahren schwierig, die Kondensationswärme gleichmäßig abzuführen und dadurch einheitliche Produkte mit geringem Anteil an Tetramethyldiphenochinon herzustellen.

Der Erfindung lag die Aufgabe zugrunde, die oben erwähnten Nachteile zu vermeiden und durch das Arbeiten in wäßriger Phase mit Hilfe von Hilfsmitteln den Polykondensationsprozeß technisch besser zu beherrschen und einheitliche Produkte mit geringem Anteil von Nebenprodukten zu erhalten.

Diese Aufgabe wird erfindungsgemäß dadurch gelöst, daß in Gegenwart von Wasser und einem Phosphonium- und/oder Ammoniumkation polykondensiert wird. Nach bevorzugter Verfahrensweise ist das Gewichtsverhältnis Wasser zu organischem Lösungsmittel 0,1 : 1 bis 100 : 1, insbesondere 1 : 1 bis 10 : 1 und das Phosphonium- und/oder Ammoniumkation wird in Mengen von 0,01 bis 10, insbesondere 0,1 bis 5 Gew.%, bezogen auf das Monomer, verwendet.

Besonders bevorzugte Ammonium- und/oder Phosphoniumkationen sind die Kationen des Tetrabutyl-, Tetraoctyl-, Tetranonyl-, Tetradodecylammoniumbromids, Tetranonylphosphoniumchlorids oder des Triphenylphosphoniumhydrochlorids.

Unter hochmolekularen Polyphenylenethern werden die durch oxidative Kupplung von 2,6-Dialkylphenol zu einer Kette alkylsubstituierter, in para-Stellung durch Sauerstoffatome etherartig gebundene Benzolringe verstanden. Die Polymeren weisen Molekulargewichte von 5 000 bis 30 000, bevorzugt 10 000 bis 25 000, bestimmt nach der in "Macromolecular Syntheses" 1 (1978), Seite 83, angegebenen Methode auf. Hochmolekulare Polyphenylenether, auch Poly-(phenylenoxide) genannt, sind an sich aus der Literatur seit längerem bekannt (vgl. z.B. US-PS 3 661 848; US-PS 3 219 625 oder US-PS 3 378 505), so daß sich hier eine weitere Beschreibung erübrigt.

Die zur Herstellung der bekannten hochmolekularen Polyphenylenether verwendeten einwertigen Phenole, die in den beiden ortho-Stellungen, nicht aber in der para-Stellung Alkylsubstituenten aufweisen, sind übliche Phenole wie 2,6-Dimethylphenol, 2,6-Diethylphenol, 2-Methyl-6-ethyl--phenol, 2-Methyl-6-propylphenol, 2,6-Dibutylphenol oder 2,3,6,-Trimethylphenol.

Zur Ausführung der Polykondensation wird üblicherweise Sauerstoffgas in die 10 bis 70, vorzugsweise 10 bis 50°C warme Lösung des Monomeren in Gegenwart eines Katalysatorkomplexes eingeleitet. Die Sauerstoffdurchflußgeschwindigkeit ist im wesentlichen die gleiche, wie sie in den US-Patentschriften 3 306 875 und 3 306 875 beschrieben sind.

Bei den für die Polykondensation bekannten Katalysatorkomplexen handelt es sich um Kombinationen aus einem Amin, z.B. n-Dibutylamin, Diethylamin, Picolin, Chinolin, Pyridinbasen, Triisopropylamin, Dimethylisopropanolamin, Triethanolamin, Triisopropanolamin oder Diisopropanolamin mit Kupfersalzen wie Kupfer-I-Bromid, Kupfer-I-Chlorid, Kupfer-I-Iodid, Kupfer-II-Acetat, Kupfer-II-Propionat, Kupfer-II-Acetessigester oder Kupfer-II-Acetylacetonat. Ein bevorzugter Bereich bei der Menge der eingesetzten Amine liegt bei 2,0 bis 25,0 Mol pro 100 Mol des
Monomeren, die Konzentration der Amine kann aber in der
Reaktionsmischung innerhalb weiter Grenzen variieren,
zweckmäßig sind jedoch niedere Konzentrationen. Die Konzentration der Kupfersalze wird gering gehalten und variiert
vorzugsweise von 0,2 bis 2,5 Mol pro 100 Mol des Monomeren.
Geeignete Amine sind ferner Pentylamin, Hexylamin, Heptylamin, Octylamin, Nonylamin oder deren Mono-, Di- oder
Trimethylderivate (vgl. DE-OS 30 29 429), geeignete Katalysatoren sind auch die Metallkomplexe des 5,14-Dihydrodi-
benzol[b.i.] [5.9.14.18.]tetraaza-[14]-annulens, insbesondere die Metallkomplexe des Eisens, Kobalts, Nickels
oder Palladiums (vgl. DE-OS 31 07 201).

Der Gewichtsanteil des Lösungsmittels liegt üblicherweise
im Bereich von 1 : 1 bis 20 : 1, d.h. maximal bis zu einem Überschuß des 20-fachen an Lösungsmittel, bezogen auf
das Monomer. Geeignete Lösungsmittel für die Monomeren
sind Chlor enthaltende Lösungsmittel wie Methylenchlorid
oder aromatische Kohlenwasserstoffe, insbesondere Benzol,
Toluol, Ethylbenzol oder deren Gemische, sowie (cyclo)aliphatische Kohlenwasserstoffe wie Cyclohexan. Die Lösungsmittel werden bevorzugt im Bereich von 1 : 1 bis 10 : 1
Gewichtsteilen, bezogen auf das monomere Phenol, eingesetzt. Darüber hinaus kann die Reaktionsmischung einen
Aktivator wie ein Diarylguanidin oder ein Diarylformamidin
enthalten (vgl. US-PS 3 544 515).

Nach erfindungsgemäßem Verfahren wird in Gegenwart von
Wasser und einem Phosphonium- und/oder Ammoniumkation
polykondensiert. Das Gewichtsverhältnis Wasser zu organischem Lösungsmittel beträgt vorzugsweise 0,1 : 1 bis 100 : 1, insbesondere 1 : 1 bis 10 : 1. Es ist von Vorteil, das Phosphonium- und/oder das Ammoniumkation in Mengen von 0,01 bis 10, bevorzugt 0,1 bis 5 Gewichtsprozent bezogen auf das Monomer, zu verwenden. Besonders geeignete Phosphonium- und/oder Ammoniumkationen sind die Kationen des Tetrabutyl-, Tetraoctyl-, Tetranonyl-, Tetradodecylammoniumbromids, Tetranonylphosphoniumchlorids oder des Triphenylphosphoniumhydrochlorids. Die verwendeten Phosphonium- und/oder Ammoniumkationen sind an sich bekannt und dienen als Phasentransferagenzien.

Besonders geeignet ist die Anwendung der aus der DE-OS 30 42 149 bekannten Verfahrensweise auf die erfindungsgemäße Herstellung der Polyphenylenether. Dabei wird der Katalysatorkomplex als Zulauf zu den vorgelegten Monomeren eindosiert.

Der mit der Erfindung erzielte Vorteil ist insbesondere darin zu sehen, daß einheitliche Produkte mit geringem Anteil an Nebenprodukten erhalten werden.

Die Erfindung wird durch die nachfolgenden Beispiele näher erläutert.

Beispiel 1

Herstellung von Poly-[(2,6-dimethyl-1,4-phenylen)-ether]

Eine Vorlage von 1,3 g Kupfer-I-Bromid und 20 g 1,4-Dimethylpentylamin und 2 g 2,6-Dimethylphenol (= DMP) wird bei 20°C 5 Minuten unter Einleiten von Sauerstoff gerührt, und dann wird im Verlauf von 30 Minuten in eine Lösung von 204 g DMP in 400 ml Toluol und 1000 ml Wasser und 1 g Tetrabutylammoniumbromid (TBAB) eindosiert. Anschließend wird noch 1 Stunde bei 20°C gerührt. Die Reaktion wird

unter Einleiten von 30 Liter Sauerstoff pro Stunde durchgeführt.

Nach Beendigung der Reaktion wird das Polykondensat in der Reaktionslösung mit Methanol ausgefällt und 2mal mit 100 ml Methanol gewaschen. Das erhaltene Polymere hat nach dem Trocknen eine Intrinsic Viskosiät $[\eta]$ von 0,8 dl/g. Die Ausbeute an Polymeren lag bei 98 Gew.% (bezogen auf das eingesetzte Monomere).

Beispiele 2 bis 18

Wird wie im Beispiel 1 beschrieben gearbeitet, jedoch Art und Menge der Katalysatoren variiert, so werden die in der folgenden Tabelle wiedergegebenen Resultate erhalten.

Tabelle

| Beispiel Nr. | Metallkomplex [g] | | $H_2O$/LM Menge in g | Einsatz von jeweils 206 g DMP alkalisches Medium Art und Menge in g | | dl/g 25°C [$\eta$] |
|---|---|---|---|---|---|---|
| 2 | CuCl | 1,0 | 800/200 | Octylamin | 33 g | 0,6 |
| 3 | $Ni^{2+}$ | 1,5 | 700/900 | Pentylamin | 33 g | 0,56 |
| 4 | $Ni^{2+}$ | 2,0 | 600/400 | Heptylamin | 33 g | 0,45 |
| 5 | $Ni^{2+}$ | 3,0 | 500/500 | 1-Methylpentylamin | 33 g | 0,35 |
| 6 | $Ni^{2+}$ | 40 | 750/150 | 1,4-Dimethylpentylamin | 33 g | 0,28 |
| 7 | $Ni^{2+}$ | 5,0 | 800/200 | 1-Methyloctylamin | 33 g | 0,58 |
| 8 | CuBr | 1,0 | 700/300 | 1,5-Dimethyloctylamin | 33 g | 0,52 |
| 9 | $Co^{2+}$ | 2,0 | 600/400 | Nonylamin | 33 g | 0,6 |
| 10 | $Co^{2+}$ | 3,0 | 500/500 | Dibutylamin | 33 g | 0,6 |
| 11 | $Co^{2+}$ | 4,0 | 800/200 | Dibutylamin | 33 g | 0,45 |
| 12 | $Co^{2+}$ | 4,0 | 750/150 | NaOH 50%ig[x] | 25 g | 0,45 |
| 13 | CuBr | 1,0 | 700/300 | $Na_3PO_4$ 50%ig[x] | 33 g | 0,51 |
| 14 | $Co^{III}$acac | 2,0 | 600/400 | Dibutylamin | 33 g | 0,51 |
| 15 | $Fe^{2+}$ | 2,0 | 500/500 | KOH 50%ig[x] | 33 g | 0,50 |
| 16 | $Mn^{III}$acac | 3,0 | 400/600 | 1,4-Dimethylpentylamin | 33 g | 0,47 |
| 17 | $Fe^{2+}$ | 3,0 | 800/200 | Octylamin | 15 g | 0,48 |
| 18 | $Fe^{2+}$ | 5,0 | 700/300 | Dibutylamin | 30 g | 0,42 |

[x] Angaben in % beziehen sich auf jeweils 50-gewichtsprozentige wäßrige Lösungen

Die Dosierungszeit des Katalysators betrug bei den Versuchen 2 bis 10 jeweils 60 Minuten;
bei den Versuchen 11 bis 14 45 Minuten und bei den Versuchen 15 bis 18 30 Minuten.

Im Beispiel 14 wird Kobalt-III-acetylacetonat und im Beispiel 18 Mangan-III-acetylacetonat verwendet.

In den Beispielen 2 bis 6 diente Toluol als Lösungsmittel (LM)
In den Beispielen 7 bis 10 diente Ethylenbenzol als LM
In den Beispielen 11 bis 16 diente Cyclohexan als LM
In den Beispielen 17 bis 18 dient Methylenchlorid als LM.
In den Beispielen 3 bis 7, 9 bis 12, 15, 17 und 18 handelt es sich um die Metallkomplexe des 5,14-Dihydro-dibenzol[b.i.] [5.9.14.18]tetraaza[14]annulens entsprechend der DE-OS 31 07 201.

Patentansprüche

1. Verfahren zur Herstellung hochmolekularer Polyphenylenether aus einwertigen Phenolen, die in beiden ortho-Stellungen und gegebenenfalls in meta-Position, nicht aber in para-Stellung Alkylsubstituenten aufweisen, durch oxidative Kupplungsreaktionen mit Sauerstoff bei Temperaturen zwischen 10 und 70°C in Gegenwart eines Katalysators aus einem Schwermetallkomplex, eines organischen Amins, eines organischen Lösungsmittels im Bereich von 1 : 1 bis 20 : 1 Gewichtsteilen, bezogen auf das monomere Phenol, und gegebenenfalls eines Aktivators, dadurch gekennzeichnet, daß in Gegenwart von Wasser und einem Phosphonium- und/oder Ammoniumkation polykondensiert wird.

2. Verfahren nach Anspruch 1, dadurch gekennzeichnet, daß das Gewichtsverhältnis Wasser zu organischem Lösungsmittel 0,1 : 1 bis 100 : 1 beträgt.

3. Verfahren nach Anspruch 1, dadurch gekennzeichnet, daß das Phosphonium - und/oder Ammoniumkation in Mengen von 0,01 bis 10 Gewichtsprozent, bezogen auf das Monomer, verwendet wird.

4. Verfahren nach Ansprüchen 1 und 2 dadurch gekennzeichnet, daß das Gewichtsverhältnis Wasser zu organischem Lösungsmittel 1 : 1 bis 10 : 1 beträgt.

5. Verfahren nach Anspruch 1, dadurch gekennzeichnet, daß das Phosphonium- und/oder Ammoniumkation in Mengen von 0,1 bis 5 Gewichtsprozent, bezogen auf das Monomer, verwendet wird.

6. Verfahren nach Anspruch 1, <u>dadurch gekennzeichnet</u>, daß das Phosphonium- und/oder Ammoniumkation das Kation des Tetrabutyl-, Tetraoctyl-, Tetranonyl-, Tetradodecylammoniumbromids, des Tetranonylphosphoniumchlorids oder des Triphenylphosphoniumhydrochlorids ist.

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | <u>DE - A1 - 2 530 827</u> (GENERAL ELECTRIC CO.) <br><br> * Ansprüche 1-11; Beispiele 1,3-6,8-12,19-21; Seite 2, Absatz 3; Seite 5, Absatz 3 - Seite 6, Absatz 1 * <br><br> -- | 1,3,5 | C 08 G 65/44 |
| X | <u>DE - A1 - 2 738 714</u> (GENERAL ELECTRIC CO.) <br><br> * Ansprüche 1-8,10; Seite 6, Absatz 4 - Seite 7, Absatz 4; Seite 8, Absatz 2; Seite 12, Absatz 3 - Seite 13, Absatz 2; Beispiele * <br><br> -- | 1-3 | RECHERCHIERTE SACHGEBIETE (Int. Cl.³) <br><br> C 08 G 65/00 |
| Y | <u>DE - A - 1 570 676</u> (GENERAL ELECTRIC CO.) <br><br> * Beispiele 7-18; Ansprüche 1,4; Seite 3, Absatz 3; Seite 4, Zeilen 4,5; Seite 4, Absatz 3 * <br><br> -- | 1,2,4 | |
| Y | <u>US - A - 3 365 422</u> (H.M. VAN DORT) <br><br> * Ansprüche 1,6,7; Beispiele * <br><br> -- | 1,3,5 | KATEGORIE DER GENANNTEN DOKUMENTE |
| Y | <u>DE - A1 - 2 505 328</u> (GENERAL ELECTRIC CO.) <br><br> * Seite 20, Absatz 3 - Seite 21, Absatz 1; Beispiel 1 * <br><br> ---- | 1,3 | X: von besonderer Bedeutung allein betrachtet <br> Y: von besonderer Bedeutung in Verbindung mit einer anderen Veröffentlichung derselben Kategorie <br> A: technologischer Hintergrund <br> O: nichtschriftliche Offenbarung <br> P: Zwischenliteratur <br> T: der Erfindung zugrunde liegende Theorien oder Grundsätze <br> E: älteres Patentdokument, das jedoch erst am oder nach dem Anmeldedatum veröffentlicht worden ist <br> D: in der Anmeldung angeführtes Dokument <br> L: aus andern Gründen angeführtes Dokument <br><br> &: Mitglied der gleichen Patentfamilie, übereinstimmendes Dokument |

| X | Der vorliegende Recherchenbericht wurde für alle Patentansprüche erstellt. |
|---|---|

| Rechercheort | Abschlußdatum der Recherche | Prüfer |
|---|---|---|
| WIEN | 24-06-1982 | KALTENEGGER |

EPA form 1503.1 06.78